# EUROPÄISCHE PATENTSCHRIFT

(11) **EP 3 974 774 B1**
(45) Veröffentlichungstag und Bekanntmachung des Hinweises auf die Patenterteilung: **07.05.2025**
(21) Anmeldenummer: 21193239.7
(22) Anmeldetag: 26.08.2021
(51) Int. Cl.: G01C 13/00, E21B 47/001, G01S 19/47

(54) **BAUGRUBENVERMESSUNG**
CONSTRUCTION PIT MEASUREMENT
MESURE D'EXCAVATION

(30) Priorität: 23.09.2020 DE 102020124832
(43) Veröffentlichungstag der Anmeldung: 30.03.2022
(73) Patentinhaber: Hydromapper GmbH, 21079 Hamburg (DE)
(72) Erfinder: Holste, Karsten, 27389 Lauenbrück (DE); Hesse, Christian, 21614 Buxtehude (DE)
(74) Vertreter: Hauck Patentanwaltspartnerschaft mbB

(56) Entgegenhaltungen:
- CN-B- 109 131 742
- US-A1- 2012 125 077
- US-A1- 2018 031 685
- CHRISTIAN HESSE ET AL: "3D HydroMapper", HYDROGRAPHISCHE NACHRICHTEN, 1 June 2019 (2019-06-01), pages 26 - 29, XP055737139, Retrieved from the Internet <URL:https://dhyg.de/images/fachbeitraege/DOI_10.23784_HN113_03.pdf> [retrieved on 20201006], DOI: 10.23784/HN113-03

## Beschreibung

Die Erfindung betrifft die Vermessung eines wassergefüllten Bauwerks, insbesondere eines Grunds und/oder von Wänden des Bauwerks. Bei dem Bauwerk kann es sich beispielsweise um eine Grube oder andere tiefenorientierte Bauwerke, wie ein Schacht oder eine Kammer handeln. Die Vermessung kann die Vermessung des Grunds und/oder der Wände des Bauwerks umfassen. Derartige Baugruben beispielsweise werden zur Herstellung von Wasserbauwerken ausgehoben. So kann die Baugrube beispielsweise eine Schleusenkammer sein zum Schleusen von Wasserfahrzeugen.

Eine Vermessung des Grunds bzw. der Wände beispielsweise einer Baugrube ist insbesondere zu Inspektionszwecken, also zum Zweck der Untersuchung des Baugrundes bzw. der Wände auf Schäden, notwendig. Wie die Herstellung der Baugrube hat auch die Vermessung derselben unter Wasser zu erfolgen. Die Vermessung des Grundes kann beispielsweise bereits während des Aushubs durchgeführt werden, um festzustellen, ob die Grube eine gewünschte Tiefe erreicht. Nach erfolgtem Aushub wird der Grund einer Baugrube häufig betoniert. Dabei ist darauf zu achten, dass die Betonschicht eine vorgegebene Dicke exakt erreicht. Auch dies hat bei wassergefüllter Baugrube zu erfolgen, da es bei einem Lenzen der Grube bei mangelhafter Betonschicht zu einem Aufplatzen der Betonschicht kommen kann. Ein Nachbessern hierdurch entstehender Schäden ist wiederum nur bei wassergefüllter Baugrube möglich, da es ansonsten zu weiteren Schäden, insbesondere einem hydraulischen Grundbruch kommen kann.

Vermessungen des Grundes einer wassergefüllten Baugrube erfolgen heutzutage meist durch manuelle Sichtung durch einen oder mehrere Taucher. Dies ist jedoch sehr unzuverlässig und nicht reproduzierbar. Insbesondere ergeben sich Schwierigkeiten bei der Zuordnung der vom Taucher erhobenen Messdaten zu einer bestimmten Position am Baugrubengrund. Eine Unterwasservermessung ist grundsätzlich auch bekannt über auf Schwimmbojen gelagerte Messstäbe, die mittels unter Wasser angeordneter Sensoren den Grund der Baugrube vermessen. Derartige Messstäbe sind beispielsweise bekannt aus JP 2001 343 237 A sowie JP 2001 280 957 A. Die Position derartiger Messstäbe lässt sich insbesondere über GPS relativ genau bestimmen, was sie Vermessung verbessert. Die Positionsgenauigkeit lässt sich jedoch weiter verbessern.

Aus der Veröffentlichung Hesse, Holste, Neumann et al. zum Thema 3D Hydromapper in den Hydrographischen Nachrichten aus Juni 2019 wird die Vermessung eines wassernahen Bauwerks durch eine auf einem Schiff angeordnete Vermessungsvorrichtung erläutert. Vor der Vermessung wird im Rahmen einer Routenplanung, basierend auf Vorinformationen, wie groben Bestandsplänen oder 3D-Daten, eine Route festgelegt, entlang derer die Vermessungsvorrichtung für die nachfolgende Vermessung mittels des Schiffs relativ zu dem Objekt verfahren werden soll.

CN 109131742 A beschreibt ein drehbares, an der Seite eines Schiffes montiertes Erfassungssystem mit einer drehbaren Unterwasser-Instrumenten-Montageplattform. Das Messsystem umfasst eine Wasser-Instrumenten-Montageplattform, ein Satelliten-Positionierungssystem, eine Datenerfassung und ein Instrumenten-Drehsteuerterminal. Die Montageplattform für Wasserinstrumente wird an der Oberseite der seitlichen Montagestange befestigt, die drehbare Montageplattform für Unterwasserinstrumente ist in der Unterseite der seitlichen Montagestange installiert. Das Satellitenpositionierungssystem wird verwendet, um die Echtzeit-Positionsinformationen des Messschiffs zu erhalten. Datenerfassung und Instrument Rotation Control Terminal ist für die Datenerfassung, Nachbearbeitung und Steuerung der drehbaren Unterwasser-Instrument Montageplattform Rotation verwendet. Das Messsystem wird für die Meeresforschung und die Erkundung des Meeresbodens eingesetzt.

Aus US 20180031685 A1 beschreibt die Nutzung einer schwimmenden Zielmarke, wie sie an Land für die Referenzierung von terrestrischen Laserscans bekannt ist, zur Verbesserung der Positionierung einer schiffsgeführten Unterwasseraufnahme mittels Laserscanner oder Echosounder. Die Zielmarke besteht aus einem Über- und einem Unterwasserteil. Die in US 20180031685 A1 beschriebene Georeferenzierung wird als "indirekte Referenzierung" über extern bestimmte Zielmarken in der Nähe der Objektoberfläche bezeichnet und erfordert bei 3D Erfassungen für eine geschlossene Lösung immer mindestens 3 gleichzeitig bestimmte Zielmarken, was bei der vorliegenden Erfindung zur Messung von tiefenorientierten Bauwerken nicht der Fall ist.

US 20120125077 A1 betrifft eine Kalibriervorrichtung für einen Bohrkopf für Vertikalbohrungen in festem Untergrund, mit dem eine Sensordrift von Magnetometern und Beschleunigungssensoren aufgrund der hohen Temperaturen im Bohrloch kompensiert werden soll. Innerhalb der Vorrichtung werden Inertialsensoren um drei orthogonale Achsen oder Ebenen rotiert oder mittels Kardanik/Gimbal bewegt, um die Kalibrierwerte zu ermitteln. Die erfassten Messwerte dienen zur Positionsbestimmung des Bohrkopfes.

Der Erfindung liegt die Aufgabe zugrunde, eine Vermessung eines wassergefüllten Bauwerks, insbesondere einer wassergefüllten Baugrube mit höherer Positionsgenauigkeit zu ermöglichen.

Die Erfindung löst die Aufgabe durch ein System gemäß Anspruch 1 oder 2, durch ein Verfahren gemäß Anspruch 12 oder 13.

Vorteilhafte Ausgestaltungen sind Gegenstand der abhängigen Ansprüche, der Beschreibung sowie der Figuren.

Das erfindungsgemäße System umfasst eine Vermessungsvorrichtung zur Vermessung eines wassergefüllten Bauwerks, insbesondere eines Grunds einer wassergefüllten Baugrube, eine neben dem Bauwerk an Land befindlichen Haltevorrichtung und ein Tachymeter, wobei die Vermessungsvorrichtung einen stabförmigen Sensorträger umfasst mit einem im Verwendungszustand der Vermessungsvorrichtung unterhalb der Wasseroberfläche angeordneten ersten Ende und einem im Verwendungszustand der Vermessungsvorrichtung oberhalb der Wasseroberfläche angeordneten zweiten Ende, wobei an dem ersten Ende des Sensorträgers mindestens ein Vermessungssensor angeordnet ist zur Vermessung des Bauwerks, insbesondere des Grunds der Baugrube, durch Erfassen von Vermessungsdaten, wobei die Vermessungsvorrichtung weiterhin einen Beschleunigungssensor sowie einen GNSS-Empfänger zum Empfang von GNSS-Signalen von Satelliten eines globalen Navigationssattelitensystems umfasst, wobei das Tachymeter an Land befindlich und auf die Vermessungsvorrichtung gerichtet ist, wobei das System weiterhin eine Steuereinheit umfasst, die dazu ausgebildet ist, auf Grundlage von Messdaten des Beschleunigungssensors, auf Grundlage der durch den GNSS-Empfänger empfangenen GNSS-Signale sowie auf Grundlage von durch das Tachymeter erfassten Messdaten eine aktuelle Position und/oder Ausrichtung der Vermessungsvorrichtung zu ermitteln und den Vermessungsdaten zuzuordnen, wobei die Haltevorrichtung dazu ausgerichtet ist, die Vermessungsvorrichtung im Verwendungszustand zu halten.

In einer Alternative zu dem erfindungsgemäßen Verfahren, die bevorzugt eingesetzt wird, wenn ein schlechter GNSS-Empfang vorliegt, ist die Messvorrichtung alternativ oder zusätzlich mit einer Prismeneinheit, bevorzugt einem 360°-Prisma ausgestattet. Auf die Prismeneinheit ist das Tachymeter gerichtet, um die Position der Messvorrichtung zu erfassen. Das Tachymeter ist bei dieser Ausgestaltung über GNSS-Messpunkte im globalen Koordinatensystem positioniert. Das Tachymeter misst dann, ausgehend von seiner absoluten Position die relative Position der Prismeneinheit, so dass die gesamte Messung in das globale Koordinatensystem transformiert werden kann.

Das erfindungsgemäße Verfahren zur Vermessung eines wassergefüllten Bauwerks, insbesondere eines Grunds einer wassergefüllten Baugrube, mittels eines solchen Systems umfasst die Schritte: Verbringen der Vermessungsvorrichtung in einen Verwendungszustand, in dem das erste Ende des Sensorträgers unterhalb der Wasseroberfläche angeordnet ist, Vermessen des Bauwerks, insbesondere des Grunds der Baugrube, durch den mindestens einen Vermessungssensor durch Erfassen von Vermessungsdaten, Ermitteln einer aktuellen Position und/oder Ausrichtung der Vermessungsvorrichtung auf Grundlage von Messdaten des Beschleunigungssensors, auf Grundlage der durch den GNSS-Empfänger empfangenen GNSS-Signale sowie auf Grundlage der Messdaten eines an Land befindlichen, auf die Vermessungsvorrichtung gerichteten Tachymeters, Zuordnen der aktuellen Position und/oder Ausrichtung der Vermessungsvorrichtung zu den Vermessungsdaten, wobei die Vermessungsvorrichtung von Land aus im Verwendungszustand gehalten wird.

Eine alternative oder zusätzliche Ausgestaltung des Verfahrens, die beispielsweise, aber nicht nur, zum Einsatz kommt, wenn für die Messvorrichtung ein schlechter GNSS-Empfang vorliegt, sieht vor, dass die Position des Tachymeters mit Hilfe von GNSS-Messpunkten im globalen Koordinatensystem festzulegen. Das Tachymeter ist dann auf eine Prismeneinheit, bevorzugt ein 360°-Prisma, an der Messvorrichtung gerichtet. So gelingt es, die Messvorrichtung in einem globalen Koordinatensystem zu erfassen.

Im Falle von Abschattungen oder der vollständigen Abwesenheit von GNSS Signalen kann die über Wasser erfolgende Referenzierung beispielsweise des Drehkreiseses, seiner Flächennormalen sowie des Drehmittelpunktes mit einem automatisch zielverfolgenden und messenden (trackenden) Tachymeter durchgeführt werden. Dieses Tachymeter kann aufgrund der hohen lokalen Messgenauigkeit auch zur Qualitätsverbesserung sowie zur Überbrückung von Signalunterbrechungen des GNSS genutzt werden, wenn das System beispielsweise seilgetragen ist und der GNSS Empfang durch die Seile gestört wird.

Da die Messungen mit Beschleunigungssensoren und Inertialen Messeinheiten (IMU) idealerweise in einem globalen raumfesten Koordinatensystem (beispielsweise WGS84) und nicht in einem lokalen standpunktbezogene System (wie mit Tachymeter üblich mit Tachymeterstandpunkt = 0,0,0 und Z-Achse koaxial zum lokalen Schwerevektor) durchgeführt werden, erfolgt vor der Tachymetermessung eine sogenannte Stationierung des Tachymeters im WGS84 System. Hierzu werden in einem mit GNSS messbaren Bereich, also beispielsweise außerhalb der Halle oder des abgeschatteten Bereiches, mindestens 3, idealerweise 5-6 Passpunkte mittels GNSS und Tachymeter nacheinander bestimmt. Über eine 7-Parameter-Transformation wird das Tachymeter anschließend in das globale Koordinatensystem transformiert und kann die Position der Prismeneinheit dadurch im GNSS-Koordinatensystem bestimmen.

Das Prismeneinheit kann grundsätzlich gleichzeitig mit GNSS, aber auch allein eingesetzt werden. Eine Montage der Prismeneinheit ist auf der der GNSS-Antenne gegenüberliegenden Seite des Querträgers oder unterhalb der Antenne möglich. Auch bei zwei GNSS-Antennen kann das Prisma natürlich unterhalb des Querträgers montiert werden, dadurch wird die Redundanz und Fehlertoleranz verbessert.

Ein Offset zur Drehachse des Stabes wird im Rahmen der Auswertung kalibriert, kann aber - ebenso wie bei der GNSS-Antenne - zur Steigerung der Genauigkeit als Sollbedingung mit eingeführt werden.

In der Auswertung werden X,Y,Z-Koordinaten verwendet, so dass das statt oder gleichzeitig mit der GNSS Antenne rotierende Prismeneinheit wie eine GNSS Antenne verwendet werden kann. Alle Messungen müssen aufgrund der Bewegung des Systems sehr genau zeitreferenziert werden. Hierzu ist das Tachymeter über einen Messrechner mit der GNSS-Zeit (UTC) oder der Atomzeit synchronisiert.

Die Prismeneinheit kann natürlich auch abgeschattet werden, bei einer Montage unter dem Querträger wird es das auch 2x pro Umlauf durch den Messstab. Allerdings ist das Tachymeter in der Lage, die Position auch während der Bewegung wiederzufinden und die Messung nach kurzer Zeit fortzusetzen.

Das erfindungsgemäße Verfahren kann mittels des erfindungsgemäßen Systems ausgeführt werden. Das erfindungsgemäße System ist folglich dazu geeignet, das erfindungsgemäße Verfahren auszuführen. Die erfindungsgemäße Vermessungsvorrichtung kann Teil des Systems sein und für das Verfahren verwendet werden. System, Verfahren sowie Vermessungsvorrichtung werden im Folgenden gemeinsam erläutert, wobei gemachte Erläuterungen gelten entsprechend für alle Ausgestaltungen.

Im Verwendungszustand der Vermessungsvorrichtung, also mit in das Wasser des Bauwerks eingeführtem ersten Ende des Sensorträgers kann über den mindestens einen Vermessungssensor das Bauwerks, insbesondere ein Grund und/oder Wände des Bauwerks, vermessen werden. Grundsätzlich kann über die gesamte Wasserkontaktfläche des Bauwerks vermessen werden. Der stabförmige Sensorträger ist hierfür erfindungsgemäß von Land aus im Verwendungszustand gehalten, wie später noch erläutert wird. Der stabförmige Sensorträger kann beispielsweise eine Länge von 50 m, bevorzugt eine Länge zwischen 10 m und 25 m aufweisen, insbesondere eine Länge zwischen 10 m und 22 m oder zwischen 15 m und 22 m. Der mindestens eine Vermessungssensor kann somit in eine Tiefe von beispielsweise 22 m verbracht werden. Bei einer Vermessung 5 m über Grund kann somit beispielsweise eine Baugrube mit einer Tiefe von ca. 27 m vermessen werden. Zur Vermessung des Bauwerks kann der mindestens eine Vermessungssensor rotiert werden, wie noch erläutert wird. Bei der Vermessung ist eine möglichst exakte Kenntnis der jeweils aktuellen Position der Vermessungsvorrichtung und damit des Vermessungssensors von wesentlicher Bedeutung, da nur so die über den mindestens einen Vermessungssensor aufgenommenen Vermessungsdaten genau lokalisiert werden können. Selbiges gilt für die Ausrichtung der Vermessungsvorrichtung bzw. des Vermessungssensors. Mit der Erfindung kann den Vermessungsdaten eine Position insbesondere mit einer Genauigkeit von bis zu 5 cm zugeordnet werden. Die Steuereinheit kann dies insbesondere in Echtzeit gewährleisten
Hierfür ist erfindungsgemäß eine Kombination vorgesehen aus einem GNSS-Empfänger, einem Beschleunigungssensor sowie einem Tachymeter. Der Beschleunigungssensor kann insbesondere Teil einer inertialen Messeinheit sein. Mittels des Beschleunigungssensors, insbesondere mittels der inertialen Messeinheit, kann nicht nur die Position, sondern auch die räumliche Ausrichtung der Vermessungsvorrichtung bestimmt werden. Eine solche inertiale Messeinheit wird auch als IMU ("*inertial measurement unit*") bezeichnet. Eine IMU ist an sich bekannt und verfügt über eine räumliche Kombination mehrerer Initialsensoren, beispielsweise Beschleunigungssensoren und/oder Drehratensensoren. Mittels des Beschleunigungssensors kann insbesondere eine Bewegung der Vermessungsvorrichtung erkannt werden. Diese berücksichtigt die Steuereinheit für die Ermittlung der aktuellen Position bzw. Ausrichtung der Vermessungsvorrichtung. In die Positionsbestimmung gehen auch die GNSS-Signale ein. GNSS ist bekanntermaßen die Abkürzung für globales Navigationssatellitensystem, wobei es sich beispielsweise um GPS, Galileo, GLONASS, BEIDOU oder QZSS handeln kann. Der GNSS-Empfänger kann insbesondere an dem zweiten Ende des Sensorträgers angeordnet sein, im Verwendungszustand der Vermessungsvorrichtung also oberhalb der Wasseroberfläche. Insbesondere können zwei GNSS-Empfänger vorgesehen sein zur genaueren Positionsbestimmung. Die Kombination der Vermessungsvorrichtung und damit des mindestens einen Vermessungssensors kann durch eine Korrelation der GNSS-Signale sowie der Messdaten des Beschleunigungssensors bzw. der IMU bereits relativ genau bestimmt werden. Allerdings kann es zu Unterbrechungen des GNSS-Empfangs oder zu einer eingeschränkten Datenqualität der GNSS-Signale kommen. Dies wirkt sich negativ auf die Genauigkeit der Positionsbestimmung aus. Insbesondere kann es zu einem Drift des Beschleunigungssensors bzw. der IMU kommen, welcher nicht länger durch das GNSS stabilisiert werden kann.

Erfindungsgemäß ist daher zusätzlich zu dem Beschleunigungssensor bzw. der IMU sowie dem GNSS-Empfänger ein Tachymeter zur Positionsbestimmung der Vermessungsvorrichtung vorgesehen. Insbesondere kann mittels des Tachymeters auch die Ausrichtung der Vermessungsvorrichtung exakter ermittelt werden, beispielsweise eine Neigung des Sensorträgers. Das Tachymeter ist dabei neben der Baugrube an Land angeordnet und auf die Vermessungsvorrichtung gerichtet, insbesondere auf das oberhalb der Wasseroberfläche angeordnete zweite Ende des Sensorträgers. Das Tachymeter bestimmt in an sich bekannter Weise die Position der Vermessungsvorrichtung im Raum. Beispielsweise kann das Tachymeter auf ein an der Vermessungsvorrichtung angeordnetes Prisma gerichtet sein oder einen optisch eindeutig identifizierbaren Punkt an der Vermessungsvorrichtung mithilfe einer im Tachymeter angeordneten Kamera erfassen. Durch Kombination der GNSS-Signale, der Messdaten des Beschleunigungssensors bzw. der IMU sowie der Messdaten des Tachymeters kann eine besonders exakte Positionsbestimmung bzw. exakte Bestimmung der Ausrichtung der Vermessungsvorrichtung erfolgen. Durch Zuordnen dieser Positions- bzw. Ausrichtungsdaten zu den über den mindestens einen Vermessungssensor aufgenommenen Vermessungsdaten können die Vermessungsdaten exakt lokalisiert werden. Somit wird eine besonders exakte Vermessung erreicht. Liegt beispielsweise für die Messvorrichtung ein schlechter Empfang mit GNSS-Signalen vor, so kann das Tachymeter mit Hilfe von Messpunkten in seiner Position bestimmt werden und die Messvorrichtung über eine Prismeneinheit mit dem Tachymeter vermessen werden.

Das Tachymeter kann insbesondere zur Auffüllung von Lücken in den Positionsdaten bzw. Ausrichtungsdaten dienen, die aufgrund einer möglichen Abschattung des GNSS-Signals entstehen. Sollte das GNSS unzureichende Daten liefern, kann die Positionsbestimmung anhand der GNSS-Signale mit herabgewichteter Genauigkeit für GNSS erfolgen. Sollten die GNSS-Signale gar nicht empfangen werden, kann die Positionsbestimmung lediglich anhand der Messdaten des Beschleunigungssensors bzw. der IMU sowie der Messdaten des Tachymeters erfolgen. Sollte hingegen kein Sichtkontakt zum Tachymeter bestehen, kann die Positionsbestimmung zumindest anhand der Messdaten des Beschleunigungssensors bzw. der IMU sowie anhand der GNSS-Signale erfolgen.

Nach einer Ausgestaltung ist eine Aufhängung vorgesehen, mittels derer die Vermessungsvorrichtung in den Verwendungszustand verbringbar ist. Die Vermessungsvorrichtung kann also über eine Aufhängung derart in das wassergefüllte Bauwerk gehängt werden, dass sich das erste Ende des stabförmigen Sensorträgers unterhalb der Wasseroberfläche und das dem ersten Ende gegenüberliegende zweite Ende des stabförmigen Sensorträgers oberhalb der Wasseroberfläche befindet. Die Vermessungsvorrichtung, insbesondere der stabförmige Sensorträger, kann beispielsweise an einer Messplattform angeordnet sein, die mittels der Aufhängung oberhalb der Baugrube angeordnet wird. Auf der Messplattform kann sich beispielsweise eine Bedienperson aufhalten. Die Aufhängung kann nach einer diesbezüglichen Ausgestaltung eine kardanische Aufhängung sein. Die Vermessungsvorrichtung, insbesondere der Sensorträger, kann somit besonders stabil gehalten werden. So ist der Einsatz der Vermessungsvorrichtung auch in großen Tiefen bei Wind- und Wellengang möglich.

Gemäß einer Ausgestaltung umfasst das System eine neben dem Bauwerk an Land angeordnete Halteeinrichtung, die dazu ausgebildet ist, die Vermessungsvorrichtung im Verwendungszustand zu halten. Insbesondere kann die Halteeinrichtung einen Ausleger umfassen, der über der Wasseroberfläche positioniert werden kann und ein Absenken des Sensorträgers mit dem ersten Ende in das wassergefüllte Bauwerk ermöglicht. Die Vermessungsvorrichtung ist nach dieser Ausgestaltung nicht auf einer schwimmenden Plattform angeordnet. Vielmehr lagert die Vermessungsvorrichtung an Land auf. Die Halteeinrichtung kann beispielsweise eine an Land befindliche Plattform oder ein Landfahrzeug, wie ein Kran oder ein Hebegerät sein. Ein solches System ist für vom Land zugängliche wassergefüllte Bauwerke, insbesondere Baugruben, besonders praktisch, da auf eine Schwimmplattform, wie beispielsweise ein Schiff oder Boot, verzichtet werden kann. Die Vermessungsvorrichtung kann somit besonders stabil gehalten werden, ist insbesondere weniger abhängig von Strömungen oder Bewegungen an der Wasseroberfläche. Das Landfahrzeug kann den Ausleger über die Baugrube verschwenken und somit die an der Aufhängung des Auslegers angeordnete Vermessungsvorrichtung über die Baugrube verbringen. Anschließend kann die Vermessungsvorrichtung, insbesondere der Sensorträger, in die Baugrube abgesenkt werden, sodass das erste Ende des Sensorträgers die Wasseroberfläche bis zu einer gewünschten Tiefe durchtritt. Es kann bei einer solchen Aufhängung also eine Höhenverstellbarkeit der Vermessungsvorrichtung, insbesondere des Sensorträgers, erreicht werden. So kann die Vermessungsvorrichtung je nach Tiefe der Baugrube unterschiedlich weit in die Baugrube eingeführt werden durch entsprechend weites Absenken.

Zur Vermessung des Bauwerks, insbesondere dessen Grundes, kann der mindestens eine Vermessungssensor rotieren, wie bereits angesprochen. Dies kann nach einer Ausgestaltung insbesondere dadurch erreicht werden, dass der Sensorträger um seine Längsachse rotierbar ausgebildet ist. Es kann eine entsprechende Rotiervorrichtung vorgesehen sein, beispielsweise eine über einen Seilzug drehbare Drehplatte. An der Drehplatte kann ein Seilzugsensor angeordnet sein zur Erkennung der Drehposition bzw. der Drehbewegung. Der Vermessungssensor kann insbesondere in einer Ebene messen, wobei durch eine Rotation des Vermessungssensors um 360° eine Kreisfläche des Grundes vermessen werden kann.

Nach einer Ausgestaltung weist die Vermessungsvorrichtung weitere Sensoren auf, insbesondere Sensoren zur Erkennung einer Neigung und/oder einer Drehung und/oder einer Biegung des Sensorträgers. Eine Neigung oder Biegung im Sensorträger kann dazu führen, dass eine dem oberen, zweiten Ende der Vermessungsvorrichtung zugeordnete Position keinen korrekten Rückschluss zulässt auf die Position des am unteren, zweiten Ende des Sensorträgers angeordneten Vermessungssensors. So kann es aufgrund der Biegung zu einem Versatz zwischen dem ersten und dem zweiten Ende des Sensorträgers kommen, beispielsweise um 10 cm. Nach einer Ausgestaltung ist vorgesehen, eine auf die Längsachse des Sensorträgers bezogene Neigung, Drehung und/oder Biegung bei der Zuordnung der Position und/oder der Ausrichtung zu den Vermessungsdaten zu berücksichtigen. So kann ein solcher Fehler ausgeglichen werden. Beispielsweise können Dehnungsmesstreifen zur Ermittlung der Biegung des Sensorträgers vorgesehen sein. Diese können beispielsweise eine strömungsinduzierte Biegung des Sensorträgers ermitteln, bedingt durch eine im Wasser vorliegende Strömung. Das Berücksichtigen der Biegung des Sensorträgers bei der Auswertung ist insbesondere von Bedeutung, wenn die Vermessung unter Rotation des Vermessungssensors durchgeführt wird.

Dabei überfährt die Messebene des Vermessungssensors jeden Punkt am Grund zweimal, nämlich bei einer Drehung um 180° ein erstes Mal und bei einer weiteren Drehung um 180° ein zweites Mal. Hierbei kann es aufgrund einer Biegung des Sensorträgers zu einem umso größeren Fehler bei der Lokalisierung der Vermessungsdaten kommen. Bei dem erwähnten Versatz von 10 cm kann es aufgrund der Rotation zu einer um 20 cm daneben liegenden Lokalisierung kommen. Ein Ausgleich dieses Fehlers kann durch eine Kalibrierung der Vermessungsvorrichtung erfolgen. So könnte die Biegung ermittelt werden, beispielsweise durch Einmessen des Sensorträgers an Land, und für die nachfolgende Auswertung, also insbesondere die Zuordnung der ermittelten Position und/oder Ausrichtung zu den Vermessungsdaten berücksichtigt werden.

Nach einer Ausgestaltung ist die Steuereinheit weiterhin dazu ausgebildet, anhand des GNSS-Empfängers die Messdaten des Beschleunigungssensors, insbesondere der inertialen Messeinheit, die Messdaten des Tachymeters und die GNSS-Signale zeitlich miteinander zu synchronisieren. Das Verfahren kann entsprechend eine zeitliche Synchronisation vorsehen. Eine solche zeitliche Synchronisation ist zumindest dann sinnvoll, wenn der GNSS-Empfänger unzureichende GNSS-Signale empfängt. Eine solche Synchronisation kann insbesondere über eine Uhr des GNSS-Empfängers erfolgen. Auch können die durch den GNSS-Empfänger empfangenen GNSS-Signale ein Zeitsignal umfassen, wobei die zeitliche Synchronisation anhand des Zeitsignals erfolgen kann. Eine zeitliche Synchronisation ermöglicht die Positionsermittlung der Vermessungsvorrichtung in Echtzeit und beschleunigt damit die Datenauswertung.

Nach einer Ausgestaltung ist die Steuereinheit dazu ausgebildet, einen Drift des Beschleunigungssensors, insbesondere der inertialen Messeinheit mittels der GNSS-Signale sowie der Messdaten des Tachymeters zu korrigieren. So kann der bei solchen IMUs auftretende Drift, also eine unerwünschte Abweichung der Sensoren der IMU, über die GNSS-Signale korrigiert werden. Insbesondere erfolgt eine solche Korrektur gemäß dieser Ausgestaltung auch über das Tachymeter, was eine besonders zuverlässige Korrektur erlaubt, und eine solche auch dann ermöglicht, wenn kein GNSS-Signal verfügbar ist.

Auch eine Ausrichtung der Vermessungsvorrichtung kann gemäß der Erfindung den Vermessungsdaten zugeordnet werden, wie erläutert. Dabei kann nach einer Ausgestaltung das Tachymeter zur Ermittlung der Ausrichtung der Vermessungsvorrichtung ausgebildet sein. Insbesondere kann das Tachymeter eine Kamera aufweisen, mit der die aktuelle Ausrichtung der Vermessungsvorrichtung ermittelt werden kann. Auch die Ausrichtung der Vermessungsvorrichtung, insbesondere eine Neigung des Sensorträgers, ist für die Vermessungsdaten von Relevanz.

Nach einer Ausgestaltung ist der mindestens eine Vermessungssensor ausgewählt aus der folgenden Menge: Kamera, insbesondere eine Thermalkamera oder eine Multispektralkamera, Laserscanner, Echolot, insbesondere ein Fächerecholot, 3D-, Flächen- oder Zeilensensor. Das Fächerecholot wird auch Multibeam genannt. Sollten mehrere Vermessungssensoren vorgesehen sein, können diese eine beliebige Kombination der genannten Sensoren umfassen.

Eine Ausgestaltung der Erfindung wird im Folgenden anhand von Figuren erläutert. Es zeigen:
- Figur 1: ein erfindungsgemäßes System aus einer Vermessungsvorrichtung, eingeführt in eine Baugrube mittels eines Krans und einem Tachymeter in einer Seitenansicht,
- Figur 2: einen perspektivischen Blick auf Vermessungsvorrichtung und Baugrube aus Figur 1,
- Figur 3: eine erfindungsgemäße Vermessungsvorrichtung, eingeführt in eine Baugrube mittels einer am Grubenrand stehenden Plattform in einer Seitenansicht,
- Figur 4A, B: eine erfindungsgemäße Vermessungsvorrichtung, eingeführt in eine vertikale oder schräge Baugrube mittels eines Hebegeräts in einer Seitenansicht, und
- Figur 5: eine erfindungsgemäße Vermessungsvorrichtung in einer weiteren Ausgestaltung.

Soweit nichts anderes angegeben ist, bezeichnen im Folgenden gleiche Bezugszeichen gleiche Gegenstände.

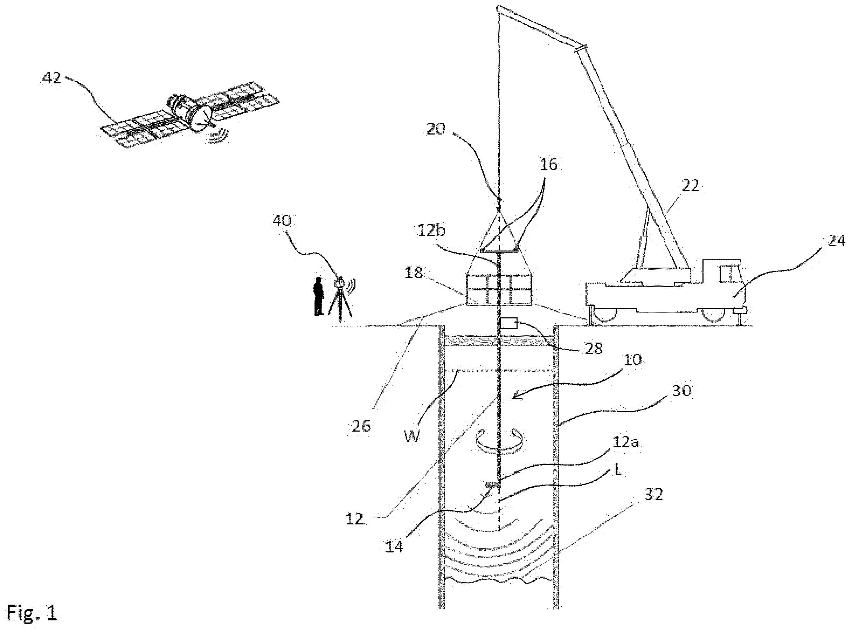

Figur 1 zeigt ein erfindungsgemäßes System umfassend eine Vermessungsvorrichtung 10 und ein Tachymeter 40. Die Vermessungsvorrichtung 10 umfasst einen stabförmigen Sensorträger 12 mit einem ersten Ende 12a und einem dem ersten Ende gegenüberliegenden zweiten Ende 12b. An dem ersten Ende 12a ist ein als Multibeam ausgebildeter Vermessungssensor 14 angeordnet, während an dem zweiten Ende 12b ein Heading mit zwei GNSS-Empfängern 16 angeordnet ist. Je nach gewählter Ausgestaltung kann der GNSS-Empfänger 16 auch zusätzlich oder ausschließlich eine Prismeneinheit aufweisen, die beispielsweise als 360°-Prisma ausgebildet von dem Tachymeter vermessen wird. Die Vermessungsvorrichtung 10 umfasst weiterhin eine inertiale Messeinheit 28, im Weiteren IMU genannt. Die IMU 28 umfasst zumindest einen Beschleunigungssensor und kann weitere Sensoren, insbesondere Drehratensensoren umfassen. Aufgabe des Systems ist eine flächenhafte 3D-Erfassung von vertikalen oder schrägen Bauwerken, Schächten und Strukturen, sowie von schrägen oder horizontalen Tunneln, die unter Wasser liegen und von der Oberfläche nicht oder nur sehr schwer erreicht werden können. Die Eingänge zu diesen Bauwerken können sich unter freiem Himmel oder in Gebäuden/Hallen/Tunneln befinden oder in Umgebungen mit schlechtem GNSS-Empfang (Wald, unter Brücken, in steilen Häuserschluchten) liegen. Hierfür wird ein flächenhafter 2D-Vermessungssensor und/oder ein thermischer Sensor rotatorisch oder oszillierend an einem langen Sensorstab bewegt. Dieser Ausleger kann je nach Sensorik stabil über dem Objekt angeordnet sein oder sich bewegend/pendelnd an einem Haken oder Seil. Der Sensorstab ist in seiner Länge nicht beschränkt (z.B. 50 m lang).

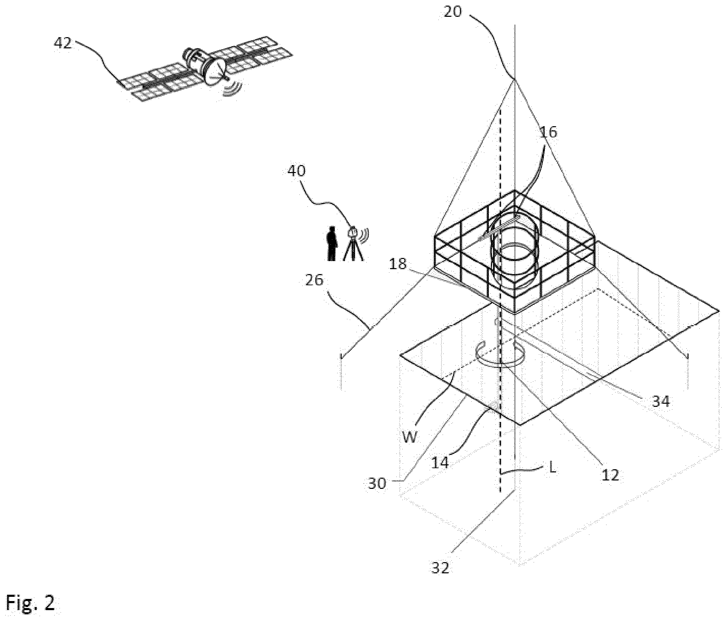

Die Vermessungsvorrichtung 10 ist an einer Messplattform 18 drehbar gelagert, sodass der Sensorträger 12 um seine Längsachse L rotiert werden kann. Die Messplattform 18 weist eine Öffnung 19 auf, durch welche der Sensorträger 12 hindurchragt, wie insbesondere Figur 2 zu entnehmen. Die Messplattform 18 und damit die Vermessungsvorrichtung 10 sind an einer Aufhängung 20 eines Auslegers 22 eines Kranfahrzeugs 24 angeordnet. Die Vermessungsvorrichtung 10 kann über den Ausleger 22 über eine Baugrube 30 verschwenkt und in die Baugrube 30 abgesenkt werden. In diesem in den Figuren ersichtlichen Verwendungszustand der Vermessungsvorrichtung 10 befindet sich das erste Ende 12a des Sensorträgers 12 unterhalb der Wasseroberfläche W, sodass mit dem Vermessungssensor 14 ein Grund 32 der Baugrube 30 untersucht werden kann. Das zweite Ende 12b befindet sich oberhalb der Wasseroberfläche W, insbesondere auch oberhalb der Baugrube 30, wie ebenfalls in den Figuren ersichtlich. Zur Sicherung der Messplattform 18 ist diese über Abspannungen 26 an dem die Baugrube 30 umgebenden Boden fixiert. Die Baugrube kann eine stabilisierende Steife 34 aufweisen, die sich zwischen gegenüberliegenden Wänden der Baugrube 30 erstrecken kann, wie Figur 2 zu entnehmen.

Mittels einer nicht dargestellten Steuereinheit des Systems werden Messdaten der IMU 28 sowie des auf die Vermessungsvorrichtung 10 gerichteten Tachymeters 40 und mittels der GNSS-Empfänger 16 von einem Satelliten 42 empfangene GNSS-Signale ausgewertet, um eine aktuelle Position sowie Ausrichtung der Vermessungsvorrichtung 10 zu ermitteln. Die so erfasste Position bzw. Ausrichtung wird mittels der Steuereinheit den durch den Vermessungssensor 14 ausgegebenen Vermessungsdaten zugeordnet. Diese Vermessungsdaten enthalten Informationen über den vermessenen Grund 32 der Baugrube 30 und werden erfasst unter Rotation des Vermessungssensors 14 um die Längsachse L des Sensorträgers 12. Für eine aussagekräftige Vermessung des Grundes 32 der Baugrube 30 ist eine möglichst exakte Lokalisierung dieser Vermessungsdaten notwendig. Dies wird erfindungsgemäß erreicht durch die erwähnte Kombination der GNSS Signale, der Messdaten der IMU sowie der Messdaten des Tachymeters.

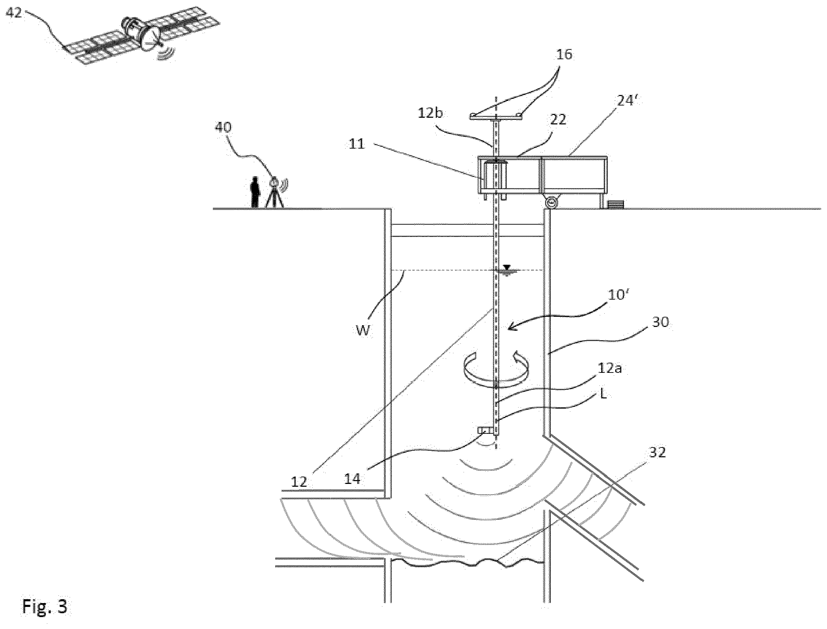

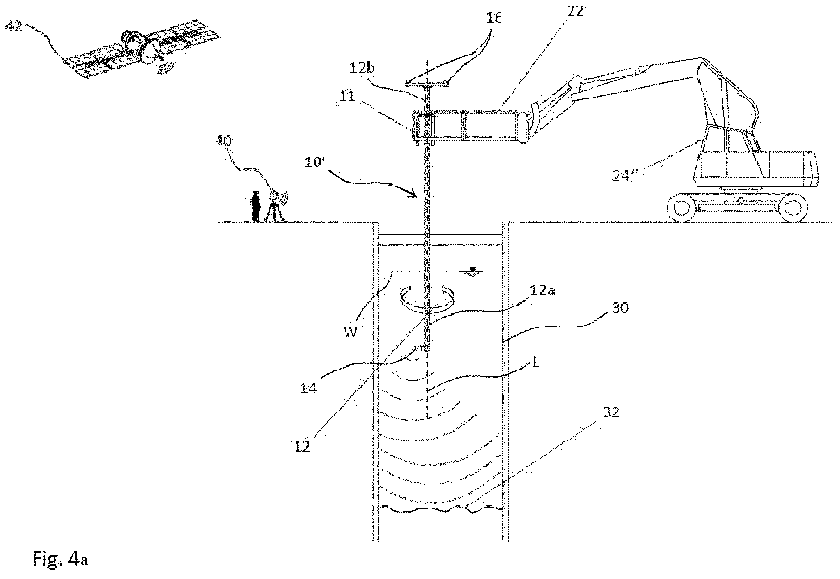

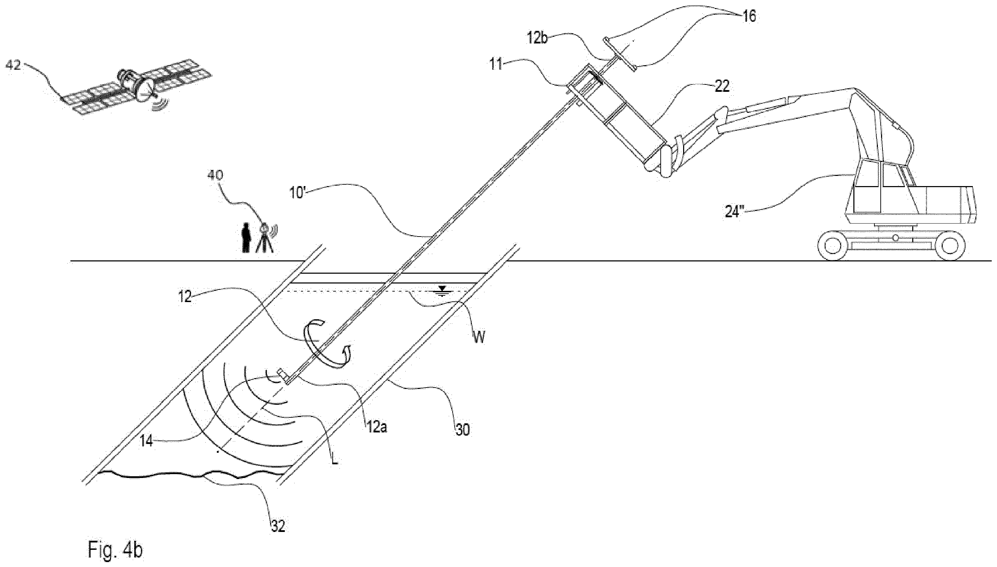

Anstatt über ein Kranfahrzeug kann die Vermessungsvorrichtung beispielsweise auch über eine an Land befindliche Plattform 24' oder ein an Land befindliches Hebegerät 24" in den Verwendungszustand verbracht werden, wie den Figuren 3 bzw. 4 zu entnehmen. In Figur 3 ragt ein als Ausleger 22 zu verstehender Teil der Plattform 24' über die Baugrube 30, wobei der Sensorträger 12 der Vermessungsvorrichtung 10' durch eine Bodenöffnung in dem Ausleger 22 senkrecht nach unten in das Wasser hineinragt. In Figur 4 ist ein entsprechend ausgebildeter Ausleger 22 mittels eines Arms des Hebefahrzeugs 24" über der Baugrube 30 gehalten, der eine Vermessungsvorrichtung 10" trägt. Durch eine Bewegung des Arms des Hebefahrzeugs 24" kann in einfacher Weise die Vermessungsvorrichtung 10" in der Höhe verstellt und der Vermessungssensor 14 in die gewünschte Tiefe in der Baugrube verbracht werden. Auch die Vermessungsvorrichtung 10 aus den Figuren 1 und 2 könnte mittels der Plattform 24' oder des Hebefahrzeugs 24" in die Verwendungsstellung verbracht und in dieser gehalten sein. Entsprechend könnten auch die Vermessungsvorrichtungen 10', 10" über eine Aufhängung und ein Kranfahrzeug wie in Figur 1 positioniert werden.

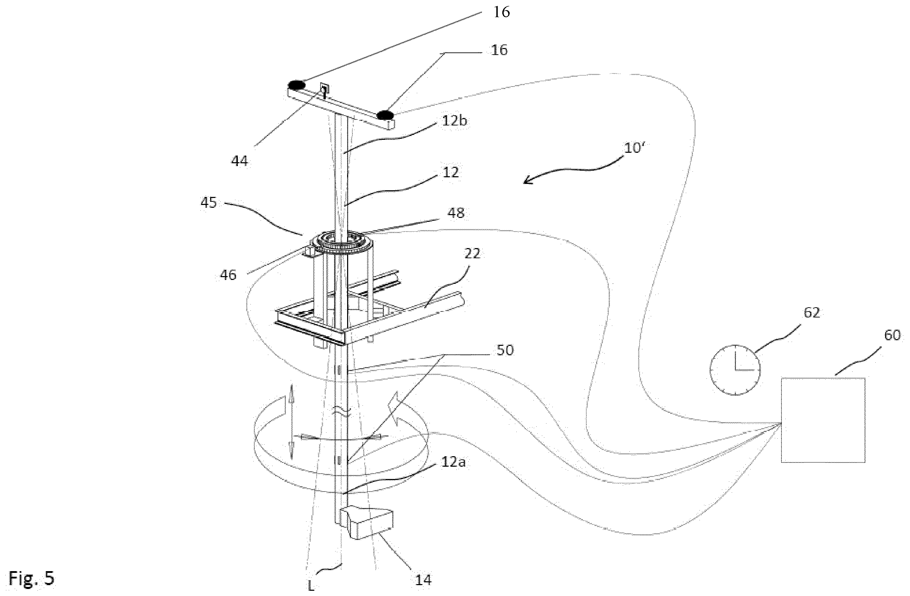

Die Vermessungsvorrichtungen 10', 10" unterscheiden sich von der Vermessungsvorrichtung 10 aus den Figuren 1 und 2 durch eine Aufnahmeeinheit 45 zur Aufnahme weiterer Sensorik, darunter ein Drehsensor 46 und ein Neigungssensor 48, sowie durch an dem Sensorträger 12 angeordnete Dehnungsmessstreifen 50, wie in Figur 5 zu erkennen. Diese Figur zeigt ein Prisma 44, auf das das Tachymeter gerichtet ist. Ein solches Prisma kann auch die Vermessungsvorrichtungen 10 aufweisen. Der Neigungssensor 48 ermöglicht die Ermittlung einer Neigung des Sensorträgers 12, also ein Verkippen seiner Längsachse L relativ zur Vertikalen. Der Drehsensor 46 ermittelt eine Drehposition bzw. eine Drehbewegung des Sensorträgers 12 um die Längsachse. Über die Dehnungsmessstreifen 50 kann eine Biegung des Sensorträgers gegenüber der Längsachse L ermittelt werden. Eine über diese Sensoren ermittelte Neigung, Drehung und/oder Biegung kann der Zuordnung der Position und/oder der Ausrichtung zu den Vermessungsdaten berücksichtigt werden.

Eine Neigung oder Biegung im Sensorträger 12 kann dazu führen, dass eine dem oberen, zweiten Ende 12b des Sensorträgers zugeordnete Position keinen korrekten Rückschluss zulässt auf die Position des am unteren, zweiten Ende 12a des Sensorträgers 12 angeordneten Vermessungssensors 14. So kann es aufgrund der Biegung zu einem Versatz zwischen dem ersten Ende 12a und dem zweiten Ende 12b des Sensorträgers kommen, beispielsweise um 10 cm. Ein solcher Fehler kann durch Berücksichtigen der Neigung oder Biegung ausgeglichen werden. Das Berücksichtigen der Biegung des Sensorträgers bei der Auswertung ist insbesondere von Bedeutung, wenn die Vermessung unter Rotation des Vermessungssensors durchgeführt wird. Dabei überfährt die Messebene des Vermessungssensors jeden Punkt am Grund zweimal, nämlich bei einer Drehung um 180° ein erstes Mal und bei einer weiteren Drehung um 180° ein zweites Mal. Hierbei kann es aufgrund einer Biegung des Sensorträgers zu einem umso größeren Fehler bei der Lokalisierung der Vermessungsdaten kommen. Bei dem erwähnten Versatz von 10 cm kann es aufgrund der Rotation zu einer um 20 cm daneben liegenden Lokalisierung kommen. Ein Ausgleich dieses Fehlers ist besondere bedeutsam.

Figur 5 zeigt zudem einen Zentralrechner 60, der mit den Sensoren der Vermessungsvorrichtung 10' kommuniziert. Dieser Zentralrechner 60 kann als zentrale Steuereinheit dienen, die die Lokalisierung der Vermessungsdaten und insbesondere auch eine bei Bezugszeichen 62 symbolisch dargestellte Zeitsynchronisierung durchführt. Auch die Vermessungsvorrichtung 10 kann natürlich entsprechend mit einem Zentralrechner kommunizieren. Die Aufnahmeeinheit 45 dient im Übrigen auch als Aufhängung der Vermessungsvorrichtung an dem Ausleger 22, wie Figur 5 zu entnehmen.

Wenn das Messsystem nicht unbeweglich fixiert werden kann (wie beispielsweise an einem Kran) wird eine Inertiale Messeinheit (IMU) verwendet, um die zeitreferenzierte Abweichung dX, dY, dZ, sowie die Drehwinkel um die Achsen X, Y und Z von der initialen Rotationsachse des Sensorstabes sowie in Verbindung mit GNSS auch die Koordinaten des kardanischen Gelenkes über Wasser zu bestimmen. Wenn die Vorrichtung in fließenden Gewässern eingesetzt wird oder der Stab so lang ist, dass er sich statisch biegt, also nicht mehr linear ist, dann kann über mehrere Dehnungsmessstreifen entlang des Stabes die Biegung des Stabes bestimmt und rechnerisch berücksichtigt werden. Für höhere Genauigkeiten kann der Drehwinkel um Z auch mittels Seilzugsensor bestimmt werden, der oben an der kardanischen Halterung des Stabes befestigt ist und die Drehung des Stabes über die Abwicklung des Seiles des Sensors bei bekanntem Abrollradius bestimmt wird. Alternativ zum Seilzugsensor kann auch ein Drehgeber/Winkelencoder oder Lateralweggeber am Drehkreis befestigt werden. Hierdurch werden die vom Vermessungssensor bestimmten Objektkoordinaten deutlich genauer, da bei größeren Messentfernungen (durch Strahlensatz) ein lateraler Fehler aus falschen/ungenauen Drehwinkeln stärker wirkt als ein Positionsfehler des Stabes. Bei instabilen und langen Stäben kann der Beschleunigungssensor auch durch eine Inertiale Messeinheit unten am Stab ersetzt werden. Bei instabilen Stäben, die keine konstante Rotationsachse haben, kann zusätzlich zur IMU unter Wasser auch eine zweite IMU über Wasser in der Nähe der GNSS Antenne verwendet werden, um die unbekannte Biegung/Knickung des Stabes sowie die unbekannte Variation der Drehachse messen und kompensieren zu können.

### Bezugszeichenliste

- 10: Vermessungsvorrichtung
- 12: Sensorträger
- 11: Sensorikaufnahme
- 12a: erstes Ende
- 12b: zweites Ende
- 14: Vermessungssensor
- 16: zwei GNSS-Empfänger
- 16': GNSS-Messpunkte
- 18: Messplattform
- 19: Öffnung
- 20: Aufhängung
- 22: Ausleger
- 24: Kranfahrzeug
- 24': Plattform an Land
- 24": Hebegerät
- 26: Abspannungen
- 28: inertiale Messeinheit (IMU)
- 30: Baugrube
- 32: Grund
- 34: Steife
- 40: Tachymeter
- 42: Satellit
- 44: Prisma
- 45: Aufnahmeeinheit
- 46: Drehsensor
- 48: Neigungssensor
- 50: Dehnungsmessstreifen
- 60: Zentralrechner
- 62: Zeitsynchronisierung

- W: Wasseroberfläche
- L: Längsachse

## Patentansprüche

1. System aus einer Vermessungsvorrichtung (10) zur Vermessung eines wassergefüllten Bauwerks (30), einer neben dem Bauwerk an Land befindlichen Haltevorrichtung (24, 24', 24") und einem Tachymeter (40), wobei die Vermessungsvorrichtung (10) einen stabförmigen Sensorträger (12) umfasst mit einem im Verwendungszustand der Vermessungsvorrichtung (10) unterhalb der Wasseroberfläche (W) angeordneten ersten Ende (12a) und einem im Verwendungszustand der Vermessungsvorrichtung (10) oberhalb der Wasseroberfläche (W) angeordneten zweiten Ende (12b), wobei an dem ersten Ende (12a) des Sensorträgers (10) mindestens ein Vermessungssensor (14) angeordnet ist zur Vermessung des Bauwerks (30) durch Erfassen von Vermessungsdaten, wobei die Vermessungsvorrichtung (10) weiterhin einen Beschleunigungssensor (28) sowie einen GNSS-Empfänger (16) zum Empfang von GNSS-Signalen von Satelliten (42) eines globalen Navigationssattelitensystems (42) umfasst, wobei das Tachymeter (40) an Land befindlich und auf die Vermessungsvorrichtung (10) gerichtet ist, wobei das System weiterhin eine Steuereinheit umfasst, die dazu ausgebildet ist, auf Grundlage von Messdaten des Beschleunigungssensors (28), auf Grundlage der durch den GNSS-Empfänger (16) empfangenen GNSS-Signale sowie auf Grundlage von durch das Tachymeter (40) erfassten Messdaten eine aktuelle Position und/oder Ausrichtung der Vermessungsvorrichtung (10) zu ermitteln und den Vermessungsdaten zuzuordnen, wobei die Haltevorrichtung dazu ausgebildet ist, die Vermessungsvorrichtung (10) im Verwendungszustand zu halten.

2. System aus einer Vermessungsvorrichtung (10) zur Vermessung eines wassergefüllten Bauwerks (30), einer neben dem Bauwerk an Land befindlichen Haltevorrichtung (24, 24', 24") und einem Tachymeter (40), wobei die Vermessungsvorrichtung (10) einen stabförmigen Sensorträger (12) umfasst mit einem im Verwendungszustand der Vermessungsvorrichtung (10) unterhalb der Wasseroberfläche (W) angeordneten ersten Ende (12a) und einem im Verwendungszustand der Vermessungsvorrichtung (10) oberhalb der Wasseroberfläche (W) angeordneten zweiten Ende (12b), wobei an dem ersten Ende (12a) des Sensorträgers (10) mindestens ein Vermessungssensor (14) angeordnet ist zur Vermessung des Bauwerks (30) durch Erfassen von Vermessungsdaten, wobei die Vermessungsvorrichtung (10) weiterhin einen Beschleunigungssensor (28) sowie eine Prismeneinheit (16') für das Tachymeter (40) aufweist, wobei das Tachymeter (40) an Land befindlich, auf die Vermessungsvorrichtung (10) gerichtet und über GNSS-Messpunkte, die zum Empfang von GNSS-Signalen von Satelliten eines globalen Navigationssystems (42) ausgebildet sind, in seiner Position bestimmt ist, wobei das System weiterhin eine Steuereinheit umfasst, die dazu ausgebildet ist, auf Grundlage von Messdaten des Beschleunigungssensors (28), auf Grundlage der durch die GNSS-Messpunkte (16') empfangenen GNSS-Signale sowie auf Grundlage von durch das Tachymeter (40) erfassten Messdaten eine aktuelle Position und/oder Ausrichtung der Vermessungsvorrichtung (10) zu ermitteln und den Vermessungsdaten zuzuordnen, wobei die Haltevorrichtung dazu ausgebildet ist, die Vermessungsvorrichtung im Verwendungszustand zu halten.

3. System nach Anspruch 1 oder 2, **gekennzeichnet durch** eine Aufhängung (20) mittels derer die Vermessungsvorrichtung (10) in den Verwendungszustand verbracht werden kann.

4. System nach Anspruch 3, **dadurch gekennzeichnet, dass** die Aufhängung (20) eine kardanische Aufhängung ist.

5. System nach Anspruch 1, **dadurch gekennzeichnet, dass** die Halteeinrichtung (24, 24', 24") einen Ausleger (22) umfasst, der über der Wasseroberfläche positioniert werden kann und ein Absenken des Sensorträgers (12) mit dem ersten Ende (12a) in das wassergefüllte Bauwerk (30) ermöglicht.

6. System nach einem der vorhergehenden Ansprüche, **dadurch gekennzeichnet, dass** der Sensorträger (12) um seine Längsachse (L) rotierbar ist.

7. System nach einem der vorhergehenden Ansprüche, **dadurch gekennzeichnet, dass** die Steuereinheit weiterhin dazu ausgebildet ist, anhand des GNSS-Empfängers (16) die Messdaten des Beschleunigungssensors (28), die Messdaten des Tachymeters (40) und die GNSS-Signale zeitlich miteinander zu synchronisieren.

8. System nach Anspruch 7, **dadurch gekennzeichnet, dass** die Steuereinheit dazu ausgebildet ist, zur zeitlichen Synchronisation ein über den GNSS-Empfänger (16) des Tachymeters (40) empfangenes Zeitsignal zu nutzen und/oder die von dem Tachymeter (40) empfangenen Messdaten beim Empfang mit einem Zeitstempel zu versehen.

9. System nach einem der vorhergehenden Ansprüche, **dadurch gekennzeichnet, dass** der Beschleunigungssensor Teil einer inertialen Messeinheit (28) ist.

10. System nach Anspruch 9, **dadurch gekennzeichnet, dass** die Steuereinheit dazu ausgebildet ist, einen Drift der inertialen Messeinheit (28) mittels der GNSS-Signale sowie der Messdaten des Tachymeters (40) zu korrigieren.

11. System nach einem der vorhergehenden Ansprüche, **dadurch gekennzeichnet, dass** der mindestens eine Vermessungssensor (14) ausgewählt ist aus der folgenden Menge: Kamera, insbesondere eine Thermalkamera oder Multispektralkamera, ein Laserscanner, Echolot, insbesondere ein Fächerecholot, 3D-Flächen- oder Zeilensensor.

12. Verfahren zur Vermessung eines wassergefüllten Bauwerks (30) mittels eines Systems nach einem der vorhergehenden Ansprüche, mit den Schritten: Verbringen der Vermessungsvorrichtung (10) in einen Verwendungszustand, in dem das erste Ende (12a) des Sensorträgers (10) unterhalb der Wasseroberfläche angeordnet ist, Vermessen des Bauwerks (30) durch den mindestens einen Vermessungssensor (14) durch Erfassen von Vermessungsdaten, Ermitteln einer aktuellen Position und/oder Ausrichtung der Vermessungsvorrichtung (10) auf Grundlage von Messdaten des Beschleunigungssensors (28), auf Grundlage der durch den GNSS-Empfänger (16) empfangenen GNSS-Signale sowie auf Grundlage der Messdaten eines an Land befindlichen, auf die Vermessungsvorrichtung gerichteten Tachymeters (40), Zuordnen der aktuellen Position und/oder Ausrichtung der Vermessungsvorrichtung (10) zu den Vermessungsdaten, wobei die Vermessungsvorrichtung von Land aus im Verwendungszustand gehalten wird.

13. Verfahren zur Vermessung eines wassergefüllten Bauwerks (30) mittels eines Systems nach einem der vorhergehenden Ansprüche, mit den Schritten: Verbringen der Vermessungsvorrichtung (10) in einen Verwendungszustand, in dem das erste Ende (12a) des Sensorträgers (10) unterhalb der Wasseroberfläche angeordnet ist, Vermessen des Bauwerks (30) durch den mindestens einen Vermessungssensor (14) durch Erfassen von Vermessungsdaten, Ermitteln einer aktuellen Position und/oder Ausrichtung der Vermessungsvorrichtung (10) auf Grundlage von Messdaten des Beschleunigungssensors (28), auf Grundlage der durch GNSS-Messpunkte (16') empfangenen GNSS-Signale für die Position eines Tachymeters sowie auf Grundlage von Messdaten des an Land befindlichen, auf Prismeneinrichtungen gerichteten Tachymeters (40), Zuordnen der aktuellen Position und/oder Ausrichtung der Vermessungsvorrichtung (10) zu den Vermessungsdaten, wobei die Vermessungsvorrichtung von Land aus im Verwendungszustand gehalten wird.

14. Verfahren nach Anspruch 12 oder 13, **gekennzeichnet durch** zeitliche Synchronisation der Messdaten des Beschleunigungssensors (28), der Messdaten des Tachymeters (40) und der GNSS-Signale miteinander anhand des GNSS-Empfängers (16), zumindest dann, wenn der GNSS-Empfänger (16) unzureichende GNSS-Signale empfängt.

15. Verfahren nach einem der Ansprüche 12 bis 14, **gekennzeichnet durch** Verbringen der Vermessungsvorrichtung (10) in den Verwendungszustand durch eine neben dem Bauwerk (30) an Land befindliche Halteeinrichtung (24, 24', 24").

16. Verfahren nach Anspruch 15, **gekennzeichnet durch** Verbringen der Vermessungsvorrichtung (10) in den Verwendungszustand durch Positionieren eines Auslegers (22) der an Land befindlichen Halteeinrichtung (24, 24', 24"), an dem die Vermessungsvorrichtung (10) angeordnet ist, über dem Bauwerk (30) und Absenken des Sensorträgers (12) mit dem ersten Ende (12a) in das Bauwerk (30).

17. Verfahren nach einem der Ansprüche 12 bis 16, **gekennzeichnet durch** Berücksichtigen einer Neigung und/oder einer Drehung und/oder einer Biegung des Sensorträgers (12) bei der Zuordnung der Position und/oder der Ausrichtung zu den Vermessungsdaten.

## Claims

1. A system consisting of a measuring device (10) for measuring a water-filled structure (30), a holding device (24, 24', 24") located on land next to the structure (30), and a tachymeter (40), wherein the measuring device (10) comprises a rod-shaped sensor support (12) having a first end (12a) arranged below the water surface (W) in the state of use of the measuring device (10) and a second end (12b) arranged above the water surface (W) in the state of use of the measuring device (10), wherein at least one measuring sensor (14) is arranged at the first end (12a) of the sensor support (10) for measuring the structure (30) by recording measuring data, wherein the measuring device (10) further comprises an acceleration sensor (28) and a GNSS receiver (16) for receiving GNSS signals from satellites (42) of a global navigation satellite system (42), wherein the tachymeter (40) is located on land and is directed towards the measuring device (10), wherein the system further comprises a control unit which is designed to ascertain a current position and/or orientation of the measuring device (10) on the basis of measurement data of the acceleration sensor (28), on the basis of the GNSS signals received by the GNSS receiver (16), and on the basis of measurement data recorded by the tachymeter (40) and to assign said current position and/or orientation to the measuring data, wherein the holding apparatus is designed to hold the measuring device (10) in the state of use.

2. A system consisting of a measuring device (10) for measuring a water-filled structure (30), a holding device (24, 24', 24") located on land next to the structure, and a tachymeter (40), wherein the measuring device (10) comprises a rod-shaped sensor support (12) having a first end (12a) arranged below the water surface (W) in the state of use of the measuring device (10) and a second end (12b) arranged above the water surface (W) in the state of use of the measuring device (10), wherein at least one measuring sensor (14) is arranged at the first end (12a) of the sensor support (10) for measuring the structure (30) by recording measuring data, wherein the measuring device (10) further comprises an acceleration sensor (28) and a prism unit (16') for the tachymeter (40), wherein the tachymeter (40) is located on land, is directed towards the measuring device (10), and is determined in its position via GNSS measuring points that are designed to receive GNSS signals from satellites of a global navigation system (42), wherein the system further comprises a control unit which is designed to ascertain a current position and/or orientation of the measuring device (10) on the basis of measurement data of the acceleration sensor (28), on the basis of the GNSS signals received by the GNSS measuring points (16'), and on the basis of measurement data recorded by the tachymeter (40) and to assign said current position and/or orientation to the measuring data, wherein the holding device is designed to hold the measuring device (10) in the state of use.

3. The system according to claim 1 or 2, **characterized by** a suspension (20) by means of which the measuring device (10) can be brought into the state of use.

4. The system according to claim 3, **characterized in that** the suspension (20) is a gimbal.

5. The system according to claim 1, **characterized in that** the holding apparatus (24, 24', 24") comprises a boom (22) which can be positioned above the water surface and which makes it possible to lower the sensor support (12) by the first end (12a) into the water-filled structure (30).

6. The system according to one of the preceding claims, **characterized in that** the sensor support (12) can be rotated about its longitudinal axis (L).

7. The system according to one of the preceding claims, **characterized in that** the control unit is further designed to temporally synchronize the measurement data of the acceleration sensor (28), the measurement data of the tachymeter (40), and the GNSS signals with one another using the GNSS receiver (16).

8. The system according to claim 7, **characterized in that** the control unit is designed, for the temporal synchronization, to use a time signal received via the GNSS receiver (16) of the tachymeter (40) and/or to provide the measurement data received from the tachymeter (40) with a time stamp upon receipt.

9. The system according to one of the preceding claims, **characterized in that** the acceleration sensor is part of an inertial measuring unit (28).

10. The system according to claim 9, **characterized in that** the control unit is designed to correct a drift of the inertial measuring unit (28) by means of the GNSS signals and the measurement data of the tachymeter (40).

11. The system according to one of the preceding claims, **characterized in that** the at least one measuring sensor (14) is selected from the following set: camera, in particular a thermal camera or multispectral camera, a laser scanner, an echo sounder, in particular a multi-beam echo sounder, a 3D area sensor, or a line sensor.

12. A method for measuring a water-filled structure (30) by means of a system according to one of the preceding claims, comprising the steps of: bringing the measuring device (10) into a state of use, in which the first end (12a) of the sensor support (10) is arranged below the water surface; measuring the structure (30) by means of the at least one measuring sensor (14) by recording measuring data; ascertaining a current position and/or orientation of the measuring device (10) on the basis of measurement data of the acceleration sensor (28), on the basis of the GNSS signals received by the GNSS receiver (16), and on the basis of the measurement data of a tachymeter (40) located on land and directed towards the measuring device (40); assigning the current position and/or orientation of the measuring device (10) to the measuring data, wherein the measuring device is held in the state of use from on land.

13. A method for measuring a water-filled structure (30) by means of a system according to one of the preceding claims, comprising the steps of: bringing the measuring device (10) into a state of use, in which the first end (12a) of the sensor support (10) is arranged below the water surface; measuring the structure (30) by means of the at least one measuring sensor (14) by recording measuring data; ascertaining a current position and/or orientation of the measuring device (10) on the basis of measurement data of the acceleration sensor (28), on the basis of the GNSS signals for the position of a tachymeter received by GNSS measuring points (16'), and on the basis of measurement data of the tachymeter (40) located on land and directed towards prism apparatuses; assigning the current position and/or orientation of the measuring device (10) to the measuring data, wherein the measuring device is held in the state of use from on land.

14. The method according to claim 12 or 13, **characterized by** temporal synchronization of the measurement data of the acceleration sensor (28), of the measurement data of the tachymeter (40), and of the GNSS signals with one another using the GNSS receiver (16), at least when the GNSS receiver (16) receives inadequate GNSS signals.

15. The method according to one of claims 12 to 14, **characterized by** bringing the measuring device (10) into the state of use by means of a holding apparatus (24, 24', 24") located on land next to the structure (30).

16. The method according to claim 15, **characterized by** bringing the measuring device (10) into the state of use by positioning a boom (22) of the holding apparatus (24, 24', 24") located on land, on which boom the measuring device (10) is arranged, above the structure (30) and lowering the sensor support (12) by the first end (12a) into the structure (30).

17. The method according to one of claims 12 to 16, **characterized by** taking into account an inclination and/or a rotation and/or a bending of the sensor support (12) when assigning the position and/or orientation to the measuring data.

## Revendications

1. Système comprenant un dispositif de mesure (10) destiné à mesurer une construction remplie d'eau (30), un dispositif de maintien (24, 24', 24") situé à terre à côté de la construction et un tachymètre (40), dans lequel le dispositif de mesure (10) comporte un support de capteur en forme de tige (12) présentant une première extrémité (12a) disposée sous la surface de l'eau (W) dans un état d'utilisation du dispositif de mesure (10) et une deuxième extrémité (12b) disposée au-dessus de la surface de l'eau (W) dans un état d'utilisation du dispositif de mesure (10), dans lequel au moins un capteur de mesure (14) est disposé à la première extrémité (12a) du support de capteur (10) pour la mesure de la construction (30) par collecte de données de mesure, dans lequel le dispositif de mesure (10) comporte en outre un capteur d'accélération (28) ainsi qu'un récepteur GNSS (16) pour la réception de signaux GNSS de satellites (42) d'un système global de navigation par satellites (42), dans lequel le tachymètre (40) se situe à terre et est dirigé vers le dispositif de mesure (10), dans lequel le système comporte en outre une unité de commande conçue pour déterminer une position et/ou une orientation actuelles du dispositif de mesure (10) sur la base de données de mesure du capteur d'accélération (28), sur la base des signaux GNSS reçus par le récepteur GNSS (16) ainsi que sur la base de données de mesure collectées par le tachymètre (40), et pour attribuer celles-ci aux données de mesure, dans lequel le dispositif de maintien est conçu pour maintenir le dispositif de mesure (10) dans l'état d'utilisation.

2. Système comprenant un dispositif de mesure (10) destiné à mesurer une construction remplie d'eau (30), un dispositif de maintien (24, 24', 24") situé à terre à côté de la construction et un tachymètre (40), dans lequel le dispositif de mesure (10) comporte un support de capteur en forme de tige (12) présentant une première extrémité (12a) disposée sous la surface de l'eau (W) dans un état d'utilisation du dispositif de mesure (10) et une deuxième extrémité (12b) disposée au-dessus de la surface de l'eau (W) dans un état d'utilisation du dispositif de mesure (10), dans lequel au moins un capteur de mesure (14) est disposé à la première extrémité (12a) du support de capteur (10) pour la mesure de la construction (30) par collecte de données de mesure, dans lequel le dispositif de mesure (10) comporte en outre un capteur d'accélération (28) ainsi qu'une unité de prisme (16') pour le tachymètre (40), dans lequel le tachymètre (40) est situé à terre, dirigé vers le dispositif de mesure (10) et défini dans sa position par des points de mesure GNSS, lesquels sont conçus pour la réception de signaux GNSS de satellites d'un système global de navigation par satellites (42), dans lequel le système comporte en outre une unité de commande conçue pour déterminer une position et/ou une orientation actuelles du dispositif de mesure (10) sur la base de données de mesure du capteur d'accélération (28), sur la base des signaux GNSS reçus par les points de mesure GNSS (16') ainsi que sur la base de données de mesure collectées par le tachymètre (40), et pour attribuer celles-ci aux données de mesure, dans lequel le dispositif de maintien est conçu pour maintenir le dispositif de mesure dans l'état d'utilisation.

3. Système selon la revendication 1 ou 2, **caractérisé par** une suspension (20) au moyen de laquelle le dispositif de mesure (10) peut être mis dans l'état d'utilisation.

4. Système selon la revendication 3, **caractérisé en ce que** la suspension (20) est une suspension à cardan.

5. Système selon la revendication 1, **caractérisé en ce que** le dispositif de maintien (24, 24', 24") comporte une flèche (22), laquelle peut être positionnée au-dessus de la surface de l'eau et permet un abaissement du support de capteur (12) avec la première extrémité (12a) dans la construction (30) remplie d'eau.

6. Système selon l'une des revendications précédentes, **caractérisé en ce que** le support de capteur (12) est rotatif autour de son axe longitudinal (L).

7. Système selon l'une des revendications précédentes, **caractérisé en ce que** l'unité de commande est en outre conçue pour synchroniser temporellement les données de mesure du capteur d'accélération (28), les données de mesure du tachymètre (40) et les signaux GNSS entre eux à l'aide du récepteur GNSS (16).

8. Système selon la revendication 7, **caractérisé en ce que** l'unité de commande est conçue pour utiliser un signal horaire reçu par le biais du récepteur GNSS (16) du tachymètre (40) pour la synchronisation temporelle et/ou pour munir les données de mesure reçues par le tachymètre (40) d'un horodatage lors de la réception.

9. Système selon l'une des revendications précédentes, **caractérisé en ce que** le capteur d'accélération fait partie d'une unité de mesure inertielle (28).

10. Système selon la revendication 9, **caractérisé en ce que** l'unité de commande est conçue pour corriger une dérive de l'unité de mesure inertielle (28) au moyen de signaux GNSS et de données de mesure du tachymètre (40).

11. Système selon l'une des revendications précédentes, **caractérisé en ce que** l'au moins un capteur de mesure (14) est sélectionné à partir du groupe suivant : une caméra, en particulier une caméra thermique ou une caméra multispectrale, un scanner laser, un échosondeur, en particulier un échosondeur multifaisceaux, un capteur de surface 3D ou un capteur linéaire.

12. Procédé de mesure d'une construction (30) remplie d'eau au moyen d'un système selon l'une des revendications précédentes, comprenant les étapes suivantes : passage du dispositif de mesure (10) dans un état d'utilisation, dans lequel la première extrémité (12a) du support de capteur (10) est disposée sous la surface de l'eau, mesure de la construction (30) par l'au moins un capteur de mesure (14) par collecte de données de mesure, détermination d'une position et/ou d'une orientation actuelles du dispositif de mesure (10) sur la base de données de mesure du capteur d'accélération (28), sur la base des signaux GNSS reçus par le récepteur GNSS (16) ainsi que sur la base des données de mesure d'un tachymètre (40) situé à terre, dirigé vers le dispositif de mesure, attribution de la position et/ou de l'orientation actuelles du dispositif de mesure (10) aux données de mesure, dans lequel le dispositif de mesure est maintenu dans l'état d'utilisation depuis la terre.

13. Procédé de mesure d'une construction (30) remplie d'eau au moyen d'un système selon l'une des revendications précédentes, comprenant les étapes suivantes : passage du dispositif de mesure (10) dans un état d'utilisation, dans lequel la première extrémité (12a) du support de capteur (10) est disposée sous la surface de l'eau, mesure de la construction (30) par l'au moins un capteur de mesure (14) par collecte de données de mesure, détermination d'une position et/ou d'une orientation actuelles du dispositif de mesure (10) sur la base de données de mesure du capteur d'accélération (28), sur la base des signaux GNSS reçus par des points de mesure GNSS (16') pour la position d'un tachymètre, ainsi que sur la base de données de mesure du tachymètre (40) situé à terre, dirigé vers des dispositifs de prisme, attribution de la position et/ou de l'orientation actuelles du dispositif de mesure (10) aux données de mesure, dans lequel le dispositif de mesure est maintenu dans l'état d'utilisation depuis la terre.

14. Procédé selon la revendication 12 ou 13, **caractérisé par** une synchronisation temporelle des données de mesure du capteur d'accélération (28), des données de mesure du tachymètre (40) et des signaux GNSS entre eux à l'aide du récepteur GNSS (16), du moins lorsque le récepteur GNSS (16) reçoit des signaux GNSS insuffisants.

15. Procédé selon l'une des revendications 12 à 14, **caractérisé par** le passage du dispositif de mesure (10) dans l'état d'utilisation par un dispositif de maintien (24, 24', 24") situé à terre à côté de la construction (30).

16. Procédé selon la revendication 15, **caractérisé par** le passage du dispositif de mesure (10) dans l'état d'utilisation par positionnement d'une flèche (22) du dispositif de maintien (24, 24', 24") situé à terre, sur laquelle est disposé le dispositif de mesure (10), au-dessus de la construction (30) et par l'abaissement du support de capteur (12) avec la première extrémité (12a) dans la construction (30).

17. Procédé selon l'une des revendications 12 à 16, **caractérisé par** la prise en compte d'une inclinaison et/ou d'une rotation et/ou d'un fléchissement du support de capteur (12) lors de l'attribution de la position et/ou de l'orientation aux données de mesure.
